# EUROPÄISCHE PATENTSCHRIFT

(11) **EP 3 657 111 B1**
(45) Veröffentlichungstag und Bekanntmachung des Hinweises auf die Patenterteilung: **13.03.2024**
(21) Anmeldenummer: 19211256.3
(22) Anmeldetag: 25.11.2019
(51) Int. Cl.: F27D 1/16, F27B 3/08, C04B 35/58, C21C 5/44, C21C 5/48, C21C 5/52, C04B 35/622

(54) **VERFAHREN ZUM INSTANDSETZEN EINES ABGENUTZTEN SPÜLKÖRPERS, EINER BODENELEKTRODE UND/ODER EINER ABGENUTZTEN AUSMAUERUNG EINES METALLURGISCHEN GEFÄSSES**
METHOD FOR REPAIRING A USED FLUSHING BODY, A FLOOR ELECTRODE AND / OR USED LINING OF A METALLURGICAL VESSEL
PROCÉDÉ DE RÉPARATION D'UN CORPS DE RINÇAGE USÉ, D'UNE ÉLECTRODE DE SOL ET/OU D'UN REVÊTEMENT USÉ D'UN RÉCIPIENT MÉTALLURGIQUE

(30) Priorität: 26.11.2018 DE 102018220300; 20.11.2019 DE 102019217904
(43) Veröffentlichungstag der Anmeldung: 27.05.2020
(73) Patentinhaber: SMS Group GmbH, 40237 Düsseldorf (DE)
(72) Erfinder: de Fries, Uwe, 47506 Neukirchen-Vluyn (DE); Premanand, Krishnan, 40470 Düsseldorf (DE)
(74) Vertreter: Klüppel, Walter

(56) Entgegenhaltungen:
- DE-C1- 4 304 724
- US-A- 1 098 794
- US-A- 5 254 359

## Beschreibung

Die Erfindung betrifft ein Verfahren zum Instandsetzen eines abgenutzten Spülkörpers, einer Bodenelektrode und / oder einer abgenutzten Ausmauerung eines metallurgischen Gefäßes.

Es ist allgemein aus der Praxis der Stahlerzeugung bekannt, dass eine feuerfeste Zustellung eines metallurgischen Gefäßes durch einen Betrieb einem Verschleiß unterliegt. Bei Unterschreiten von einer Reststärke der Zustellung oder einer Rissbildung sind die entsprechenden Flächen auszutauschen oder durch geeignete Maßnahmen zu reparieren.

Dies gilt insbesondere für einen Spülkörper und / oder die umgebende Zustellung, die durch eine hohe Temperaturwechselbelastung, eine Abrasion und einen chemischen Verschleiß besonders belastet sind. Die Spülkörper sind in einem Einbauzustand typischerweise flächenbündig mit der umgebenden Zustellung verbaut. Etwaige Spalten zwischen der Zustellung und dem Spülkörper sind mit einer feuerfesten Vergussmasse ausgefüllt.

Durch den Verschleiß werden während des Einsatzes der Spülkörper die Vergussmasse und z.T. auch die Zustellung so abgetragen, dass ein Krater, eine Auswaschung oder ein Riss an dieser Stelle entsteht. Dadurch wird sowohl eine Spülwirkung des Spülkörpers beeinträchtigt als auch eine Schwachstelle in der Zustellung erzeugt, die bei einer Unterschreitung einer kritischen Reststärke auch zu einem Durchbruch und damit einem unkontrollierten Austritt von einem flüssigen Stahl führen kann. Der Zustand der Zustellung und die Reststärke des z. B. verbauten Spülkörpers werden vor jedem Einsatz eines metallurgischen Gefäßes kontrolliert und daraus bei Bedarf entsprechende Instandsetzungsmaßnahmen abgeleitet.

Üblicherweise wird, wenn ein vollständiger Austausch noch nicht angebracht erscheint, eine so genannte Spritz- oder Flickmasse auf eine noch heiße Oberfläche mittels einer Blaslanze aufgebracht. Darüber hinaus besteht auch die Möglichkeit eines direkten Einbringens der Spritz- oder Flickmasse durch Werfen oder Schleudern. Die Spritzmasse besteht üblicherweise aus einer Grundsubstanz, die eine feuerfeste Eigenschaft sicherstellt, und einem Matrixbildner, der eine Verbindung zwischen den Körnern der Grundsubstanz sicherstellt. Diese Spritzmasse wird üblicherweise als eine Mischung mit Wasser und Pressluft auf die schadhafte Stelle aufgetragen. Durch ein Trocknen, ein partielles Aufschmelzen und / oder ein Sintern unter einem Einfluss von einer Wärme wird ein kraft- und formschlüssiges Verschließen der Schadstelle erreicht.

In der EP 1 072 670 81 mit dem Titel "Anwendung TiOz-haltiger partikulärer Materialien für feuerfeste Erzeugnisse" ist beschrieben, dass ein synthetisches erzeugtes TiO₂ in unterschiedlichen Korngrößen für feuerfeste ungeformte Erzeugnisse Verwendung finden kann. Durch eine chemische Reaktion wird ein Titancarbid bzw. - nitrid als verschleißfester und feuerfester Bestandteil des Spülkörpers in dem metallurgischen Gefäß gebildet.

Die Patente EP 0 842 591 B1 und EP 0 723 734 B1 offenbaren mögliche Bauformen von Bodenelektroden in Gleichstromlichtbogenöfen. Besonders wird dort auf einen zweiteiligen Aufbau, bestehend aus einem wassergekühlten Bauteil und einem Verschleißteil, abgestellt. Das Verschleißteil besteht typischerweise aus einer Kombination von einem feuerfesten und einem metallischen Bauteil.

Aus dem Patent EP 0 217 208 B1 kann entnommen werden, dass es vorteilhaft ist, elektrisch leitende, hochschmelzende, nichtmetallische Verbindungen auf einen Boden eines Gleichstromlichtbogenofens aufzubringen. Es wird vorgeschlagen, dass der Boden des Gleichstromlichtbogenofens mit diesen Verbindungen enthaltenden feuerfesten Erzeugnissen zugestellt wird.

Der Stand der Technik beschreibt Verfahren, die es ermöglichen, in einem Betrieb dünne verschleißhemmende Schichten aufzutragen, oder den Vorteil von einer elektrisch leitenden Zustellung im Gleichstromofen. Weiterhin wird darauf verwiesen, dass ein zentrales Element des Gleichstromofens, eine Bodenelektrode, ein Verschleißteil aufweist.

Es besteht somit weiterhin das Problem, dass in dem laufenden Betrieb der Spülkörper z.Z. nur ausgetauscht werden kann. Die bekannten Flickmassen sind in ihren Gebrauchseigenschaften derart eingeschränkt, dass ein Einsatz in einem Bereich des Spülkörpers oder der Bodenelektrode nicht erfolgen kann. Ein Austausch eines Bauteils ist jedoch mit einer entsprechend langen Stillstandszeiten und den damit entsprechenden hohen Kosten für einen Produktionsausfall und den direkten Kosten für ein Ersatzteil verbunden.

Das Patent US1098794 beschreibt ein Verfahren zum Instandsetzen einer Bodenelektrode eines metallurgischen Gefäßes, aufweisend folgende Schritte: Aufbringen einer chemisch reaktionsfähigen Mischung, aufweisend Rutil und Stickstoff, in einen metallurgischen Gefäß, Chemisches Reagieren und Sintern der Mischung unter einem Wärmeeinfluss zu einem Füllkörper in einem Bereich der Elektrode in einer Abwesenheit von einer Schmelze.

Die durch die Erfindung zu lösende Aufgabe besteht darin, die aus dem Stand der Technik bekannten Verfahren zu einer Auftragung und einer Erzeugung von einer dünnen Verschleißschicht dahingehend weiterzuentwickeln, dass es möglich ist, größere Schadstellen in einem Bereich von einem Spülkörpern oder einer Bodenelektrode unter einer Berücksichtigung von speziellen Gebrauchseigenschaften für einen Elektrolichtbogenofen (EAF) mit einfachen Mitteln zu reparieren.

Das Verfahren ist gekennzeichnet dadurch, dass eine chemisch reaktionsfähige Mischung, aufweisend einen Metallträger, auf einen dem Inneren des metallurgischen Gefäßes zugewandten abgenutzten Teil eines Spülkörpers und / oder einer Ausmauerung aufgebracht wird und die reaktionsfähige Mischung unter einem Wärmeeinfluss zu einem Füllkörper in dem Bereich des abgenutzten Spülkörpers oder der abgenutzten Ausmauerung chemisch reagiert und / oder sintert, wobei die chemische Reaktion und das Sintern der Mischung gleichzeitig oder nacheinander ablaufen kann. Das Aufbringen der chemisch reaktionsfähigen Mischung auf den Spülkörper und / oder die Ausmauerung des Gefäßes erfolgt in Abwesenheit von einer Schmelze. Die Mischung für die chemische Reaktion weist neben dem Metallträger auch einen Stickstoffträger auf und / oder der Mischung wird auch ein Stickstoffträger zugeführt, so dass der gesinterte Füllkörper Metallnitrid enthält und ein ungesinterter Füllkörper unter Wärmeeinfluss oberhalb einer für den ungesinterten Füllkörper spezifischen Sintertemperatur zu einem gesinterten Füllkörper sintert. Der Metallträger ist ein Metall oder eine Metalllegierung. Die Metalllegierung oder das Metall weist vorzugsweise als Hauptbestandteil Titan (Ti) oder Titanschwamm auf.

### Definitionen:

| | |
|---|---|
| EAF: | Elektrolichtbogenofen (EAF), sowohl Gleichstromals auch Wechselstromofen |
| Spülkörper: | Gasdurchlässiger Feuerfeststein |
| Metallurgischen Gefäß: | Gefäß zur Behandlung oder Transport, insbesondere von flüssigen oder teilflüssigen metallischen Legierungen wie z.B. Sauerstoffblaskonverter, AOD-Konverter, Pfannen, Elektrolichtbogenofen (EAF) Induktionsöfen, RH-Gefäß |
| Schmelze: | Metallurgische Schmelze, bspw. Stahl- oder (Roh-)Eisenschmelze |
| Abwesenheit von Schmelze: | eine Reaktion mit der Schmelze wird vermieden, zumindest aber zur Erreichung des erfindungsgemäßen Effektes unerheblich, z.B. kleine Tropfen |

Die oben genannte Aufgabe wird gelöst durch das Verfahren nach den Ansprüchen 1 bis11.

Ein Druck, ein Durchfluss und eine Zusammensetzung eines gasförmigen Stickstoffträgers wird in Abhängigkeit von einem zu erreichenden Metallnitridgehalt in einem ungesinterten Füllkörper gesteuert oder geregelt.

Der reaktionsfähigen Mischung werden Hilfsstoffe zu einer Einstellung von Gebrauchseigenschaften zugeführt bevor die Sinterung beginnt. Die chemische Reaktion und das Sintern können in verschiedenen Bereichen des Füllkörpers gleichzeitig erfolgen.

Dadurch entsteht ein gesinterter Füllkörper mit einer kraft- und einer formschlüssigen Verbindung. Die kraft- und die formschlüssige Verbindung erfolgt durch eine mechanische Verzahnung und/oder Sinterreaktionen einer beteiligten Oberfläche des Füllkörpers, des Spülkörpers und der Ausmauerung.

Der ungesinterte Füllkörper wird vor oder während des Sinterns, aber vor einem erneuten Chargieren des metallurgischen Gefäßes, mit Schrott und / oder mit Platten aus einem elektrisch- und wärmeleitenden Material, vorzugsweise Metallblechen, abgedeckt.

Das metallurgische Gefäß ist ein Elektrolichtbogenofen (EAF) und der Spülkörper bildet eine Bodenelektrode des Elektrolichtbogenofens (EAF) aus. Die für die unterschiedlichen ablaufenden chemischen Reaktionen und Sinterprozesse notwendige Wärme stammt aus einer Restwärme der Zustellung und / oder einer zugefügten Prozesswärme.

Gemäß einem ersten Ausführungsbeispiel der Erfindung wird eine chemisch reaktionsfähige Mischung, aufweisend einen Metallträger, auf einen dem Inneren eines metallurgischen Gefäßes zugewandten abgenutzten Teil eines Spülkörpers und / oder einer Ausmauerung aufgebracht. Die Mischung reagiert unter einem Wärmeeinfluss zu einem gesinterten Füllkörper in einem Bereich des abgenutzten Spülkörpers oder der abgenutzten Ausmauerung. Ein Aufbringen der Mischung auf den Spülkörper und / oder die Ausmauerung des metallurgischen Gefäßes erfolgt in Abwesenheit von einer Schmelze.

Ein Vorliegen von Schmelzresten, beispielsweise in Form kleiner Tropfen, ist als Abwesenheit von der Schmelze im Sinne der Erfindung zu verstehen. Entscheidend ist, dass eine Reaktion mit Schmelze im Wesentlichen vermieden, zumindest aber zur Erreichung des erfindungsgemäßen Effektes im Wesentlichen unerheblich ist. Die Mischung für die chemische Reaktion weist neben einem Metallträger auch einen Stickstoffträger auf und/oder der Mischung wird ein Stickstoffträger zugeführt, so dass ein Füllkörper nach der chemischen Reaktion ein Metallnitrid enthält. Das Zuführen des Stickstoffträgers kann beispielsweise durch den Spülkörper selbst, die Umgebungsluft und / oder eine gesonderte Gasleitung erfolgen.

Ein solches Verfahren hat den Vorteil, dass durch das Aufbringen einer reaktionsfähigen Masse in oder an einer Fehlstelle mit einer Volumenausdehnung und die chemische Reaktion in dem aufgefüllten Volumen nicht nur eine dünne Schicht gebildet wird, sondern es wird ein Füllkörper mit durchgehenden Gebrauchseigenschaften erzeugt. Metallnitride haben eine gewisse Leitfähigkeit für Strom, so dass insbesondere ein leitender Füllkörper entstehen kann. Dies ist besonders von Vorteil, wenn eine Bodenelektrode repariert werden soll.

Der Metallträger ist ein Metall oder eine Metalllegierung. Die Metalllegierung oder das Metall weist als einen Hauptbestandteil Titan (Ti) oder Titanschwamm auf. Vorteilhafterweise wird durch die chemische Reaktion ein Titannitrid erzeugt, da dieser Stoff leitfähig ist und feuerfeste Eigenschaften besitzt.

Ein Druck, ein Durchfluss und eine Zusammensetzung eines gasförmigen Stickstoffträgers werden in einer Abhängigkeit von einem zu erreichenden Metallnitridgehalt im ungesinterten Füllkörper gesteuert oder geregelt. Dies hat den Vorteil, dass eine Leitfähigkeit und / oder eine Porosität im Füllkörper auf den Anwendungsfall abgestimmt gesteuert werden kann.

Bevor eine Sinterung beginnt, können der reaktionsfähigen Mischung Hilfsstoffe zu einer Einstellung weiterer Gebrauchseigenschaften zugeführt werden. Dies hat den Vorteil, dass die Gebrauchseigenschaften der reaktionsfähigen Mischung, u.a. eine Rieselfähigkeit oder eine Sinterfähigkeit, positiv beeinflusst werden können.

Ein gesinterter Füllkörper mit einer kraft- und einer formschlüssigen Verbindung entsteht vorzugsweise so, dass die kraft- und formschlüssige Verbindung durch eine mechanische Verzahnung und/oder Sinterreaktionen mit einer umgebenden beteiligten Oberfläche des Füllkörpers und des Spülkörpers / einer Ausmauerung entsteht. Dies ist besonders vorteilhaft, da hierdurch ein Ausbrechen oder ein Auswaschen in einem Betriebszustand zu vermeiden ist.

Der ungesinterte Füllkörper wird vorzugsweise vor oder während des Sinterns, aber spätestens vor einem erneuten Chargieren eines metallurgischen Gefäßes mit Schrott und/oder mit Platten aus einem elektrisch- und wärmeleitenden Material, vorzugsweise Metallblechen, abgedeckt. Dies hat den Vorteil, dass der ungesinterte oder teilgesinterte Füllkörper vor einer mechanischen Beschädigung in einem weiteren Prozessverlauf geschützt wird.

Das metallurgische Gefäß ist bevorzugt ein Elektrolichtbogenofen (EAF) und der Spülkörper bildet die Bodenelektrode des Elektrolichtbogenofens (EAF) aus. Hier ist besonders eine Eigenschaftskombination von einer Leitfähig und einer Porosität des entstandenen gesinterten Füllkörpers vorteilhaft. Die erfindungsgemäße Lösung bietet hierdurch eine besonders hohe Anzahl von Vorteilen in der Anwendung.

Eine für die unterschiedlichen ablaufenden chemischen Reaktionen und Sinterprozesse notwendige Wärme stammt aus einer Restwärme der Zustellung und / oder einer zugefügten Prozesswärme. Dies hat im Falle der Wärme aus der Zustellung den Vorteil, dass zusätzliche Kosten für eine notwendige Energie gespart werden. Die Zuführung von externer Prozesswärme bietet dagegen den Vorteil, dass eine Wärmemenge genauer gesteuert werden kann.

## Patentansprüche

1. Verfahren zum Instandsetzen eines abgenutzten Spülkörpersund / oder einer abgenutzten Ausmauerung eines metallurgischen Gefäßes, aufweisend folgende Schritte:
- Aufbringen einer chemisch reaktionsfähigen Mischung, aufweisend einen Metallträger, auf einen dem Inneren des metallurgischen Gefäßes zugewandten abgenutzten Teil des Spülkörpers und / oder der Ausmauerung;
- Chemisches Reagieren und / oder Sintern der Mischung unter einem Wärmeeinfluss zu einem Füllkörper in einem Bereich des abgenutzten Spülkörpers oder der abgenutzten Ausmauerung, wobei die chemische Reaktion und das Sintern der Mischung gleichzeitig oder nacheinander ablaufen können;
**dadurch gekennzeichnet, dass**
- das Aufbringen der chemisch reaktionsfähigen Mischung auf den Spülkörper und / oder die Ausmauerung des Gefäßes in einer Abwesenheit von einer Schmelze erfolgt;
- die Mischung für die chemische Reaktion neben dem Metallträger auch einen Stickstoffträger aufweist und / oder der Mischung auch ein Stickstoffträger zugeführt wird, so dass der Füllkörper ein Metallnitrid enthält, und
- dass der Metallträger ein Metall oder eine Metalllegierung ist; und
- dass die Metalllegierung oder das Metall als Hauptbestandteil Titan (Ti) oder Titanschwamm aufweist, und
- Sintern eines ungesinterten Füllkörpers unter Wärmeeinfluss oberhalb einer für den ungesinterten Füllkörper spezifischen Sintertemperatur zu einem gesinterten Füllkörper.

2. Verfahren nach Anspruch 1,
**dadurch gekennzeichnet,**
**dass** ein Druck und / oder ein Durchfluss und eine Zusammensetzung eines gasförmigen Stickstoffträgers in einer Abhängigkeit von einem zu erreichenden Metallnitridgehalt im ungesinterten Füllkörper gesteuert oder geregelt wird.

3. Verfahren nach einem der vorangegangenen Ansprüche
**dadurch gekennzeichnet,**
**dass** der reaktionsfähigen Mischung Hilfsstoffe zu einer Einstellung der Gebrauchseigenschaften zugeführt werden, bevor eine Sinterung beginnt.

4. Verfahren nach einem der vorangegangenen Ansprüche
**dadurch gekennzeichnet,**
**dass** die chemische Reaktion und das Sintern in verschiedenen Bereichen des Füllkörpers gleichzeitig erfolgen.

5. Verfahren nach einem der vorangegangenen Ansprüche
**dadurch gekennzeichnet,**
**dass** ein gesinterter Füllkörper mit einer kraft- und einer formschlüssigen Verbindung zu einem Spülkörper, zu einer Bodenelektrode und / oder zu einer Ausmauerung entsteht.

6. Verfahren nach dem vorangegangenen Anspruch 5
**dadurch gekennzeichnet,**
**dass** die kraft- und die formschlüssige Verbindung durch eine mechanische Verzahnung und / oder Sinterreaktionen der beteiligten Oberflächen des Füllkörpers, des Spülkörpers und / oder der Ausmauerung entsteht.

7. Verfahren nach einem der vorangegangenen Ansprüche
**dadurch gekennzeichnet,**
**dass** der ungesinterte Füllkörper vor oder während des Sinterns, aber vor einem erneuten Chargieren des metallurgischen Gefäßes mit Schrott und / oder mit Platten aus einem elektrisch- und einem wärmeleitenden Material, vorzugsweise einem Metallblechen, abgedeckt wird.

8. Verfahren nach einem der vorangegangenen Ansprüche,
**dadurch gekennzeichnet,**
**dass** es sich bei dem metallurgischen Gefäß um einen Elektrolichtbogenofen (EAF) handelt.

9. Verfahren nach Anspruch 8,
**dadurch gekennzeichnet,**
**dass** es sich bei dem Spülkörper um eine Bodenelektrode des Elektrolichtbogenofens (EAF) handelt.

10. Verfahren nach einem der vorangegangenen Ansprüche,
**dadurch gekennzeichnet,**
**dass** eine für die unterschiedlichen ablaufenden chemischen Reaktionen und einen Sinterprozess notwendige Wärme aus einer Restwärme der Zustellung und / oder einer zugefügten Prozesswärme stammt.

11. Verfahren nach einem der vorangegangenen Ansprüche,
**dadurch gekennzeichnet, dass**
eine teilweise abgenutzte Spüldüse in dem Boden eines Elektrolichtbogenofens, vorzugsweise eines Gleichstrom-Elektrolichtbogenofens zum Einschmelzen von Eisenlegierungen, repariert wird.

## Claims

1. Method for repairing a worn flushing body and/or a worn lining of a metallurgical vessel, comprising the following steps:
- coating a chemically reactive mixture comprising a metal carrier, on a worn part, which faces the interior of the metallurgical vessel, of the flushing body and/or the lining;
- chemical reaction and/or sintering of the mixture under thermal influence to form a filler body in a region of the worn flushing body or the worn lining, wherein the chemical reaction and the sintering of the mixture can elapse simultaneously or succession;
**characterised in that**
- the coating of the chemical reactive mixture on the flushing body and/or the lining of the vessel takes place in the absence of a melt;
- the mixture for the chemical reaction apart from the metal carrier also comprises a nitrogen carrier and/or a nitrogen carrier is also fed to the mixture so that the filler body contains a metal nitride and
- the metal carrier is a metal or a metal alloy; and
- the metal alloy or the metal has titanium (Ti) or titanium sponge as principal constituent; and
- sintering of an unsintered filler body under thermal influence above a sinter temperature, which is specific to the unsintered filler body, to form a sintered filler body.

2. Method according to claim 1, **characterised in that** a pressure and/or a throughflow and a composition of a gaseous nitrogen carrier is controlled or regulated in dependence on a metal nitride content, which is to be achieved, in the unsintered filler body.

3. Method according to one of the preceding claims, **characterised in that** additives for setting use properties are fed to the reactive mixture before sintering begins.

4. Method according to any one of the preceding claims, **characterised in that** the chemical reaction and the sintering take place simultaneously in different regions of the filler body.

5. Method according to any one of the preceding claims, **characterised in that** a sintered filler body with a frictional and a mechanically positive connection with a flushing body, with a floor electrode and/or with a lining arises.

6. Method according to the preceding claim 5, **characterised in that** the frictional and mechanically positive connection arises through a mechanical toothing and/or sinter reactions of the participating surfaces of the filler body, the flushing body and/or the lining.

7. Method according to any one of the preceding claims, **characterised in that** the unsintered filler body is covered before or during sintering, but before fresh charging of the metallurgical vessel, with scrap and/or with plates of an electrically and thermally conductive material, preferably a metal sheet.

8. Method according to any one of the preceding claims, **characterised in that** the metallurgical vessel is an electric arc furnace (EAF).

9. Method according to claim 8, **characterised in that** the flushing body is a floor electrode of the electric arc furnace (EAF).

10. Method according to any one of the preceding claims, **characterised in that** heat necessary for the differently lapsing of chemical reactions and a sinter process derives from residual heat of the liner and/or a supplied process heat.

11. Method according to any one of the preceding claims, **characterised in that** a partly worn flushing nozzle in the floor of an electric arc furnace, preferably a direct current electric arc furnace for smelting iron alloys, is repaired.

## Revendications

1. Procédé de réparation d'un corps de rinçage usé et/ou d'un revêtement en brique usé d'une cuve métallurgique, comprenant les étapes suivantes :
- appliquer un mélange chimiquement réactif, comprenant un support métallique, sur une partie usée du corps de rinçage et/ou du revêtement en brique faisant face à l'intérieur de la cuve métallurgique ;
- faire réagir chimiquement et/ou fritter le mélange sous l'influence de la chaleur pour former un garnissage dans une zone du corps de rinçage usé ou du revêtement en brique usé, la réaction chimique et le frittage du mélange pouvant avoir lieu simultanément ou l'un après l'autre ;
**caractérisé en ce que**
- l'application du mélange chimiquement réactif sur le corps de rinçage et/ou le revêtement en brique de la cuve s'effectue en l'absence de matière fondue ;
- le mélange pour la réaction chimique contient également, en plus du support métallique, un support azoté, et/ou un support azoté est également ajouté au mélange, de sorte que le garnissage contienne un nitrure métallique, et
- **en ce que** le support métallique est un métal ou un alliage métallique ; et
- **en ce que** l'alliage métallique ou le métal a comme composant principal du titane (Ti) ou une éponge de titane, et
- fritter un garnissage non frittée sous l'influence de la chaleur au-dessus d'une température de frittage propre au garnissage non fritté pour former un garnissage fritté.

2. Procédé selon la revendication 1,
**caractérisé**
**en ce qu'**une pression et/ou un débit et une composition d'un porteur d'azote gazeux sont contrôlés ou régulés en fonction d'une teneur en nitrure métallique à atteindre dans le garnissage non fritté.

3. Procédé selon l'une des revendications précédentes,
**caractérisé**
**en ce que** des substances auxiliaires sont ajoutées au mélange réactif pour en ajuster les propriétés d'utilisation avant le début d'un frittage.

4. Procédé selon l'une des revendications précédentes,
**caractérisé**
**en ce que** la réaction chimique et le frittage se déroulent simultanément dans différentes zones du garnissage.

5. Procédé selon l'une des revendications précédentes,
**caractérisé**
**en ce qu'**un garnissage fritté est créé avec un ajustement forcé et une liaison positive avec un corps de rinçage, avec une électrode de fond et/ou avec un revêtement en brique.

6. Procédé selon la revendication précédente 5,
**caractérisé**
**en ce que** l'ajustement forcé et la liaison positive sont créés par engrenage mécanique et/ou par des réactions de frittage des surfaces concernées du garnissage, du corps de rinçage et/ou du revêtement en brique.

7. Procédé selon l'une des revendications précédentes,
**caractérisé**
**en ce que** le garnissage non fritté est recouvert de ferraille et/ou de plaques en un matériau électriquement et thermiquement conducteur, de préférence une tôle, avant ou pendant le frittage, mais avant de charger à nouveau la cuve métallurgique.

8. Procédé selon l'une des revendications précédentes,
**caractérisé**
**en ce que** la cuve métallurgique est un four à arc électrique (EAF).

9. Procédé selon la revendication 8,
**caractérisé**
**en ce que** le corps de rinçage est une électrode de fond du four à arc électrique (EAF).

10. Procédé selon l'une des revendications précédentes,
**caractérisé**
**en ce qu'**une chaleur nécessaire aux différentes réactions chimiques ayant lieu et à un processus de frittage provient de la chaleur résiduelle provenant de la livraison et/ou de la chaleur de processus ajoutée.

11. Procédé selon l'une des revendications précédentes,
**caractérisé**
**en ce qu'**une buse de rinçage partiellement usée située dans le fond d'un four à arc électrique, de préférence un four à arc électrique à courant continu pour la fusion d'alliages ferreux, soit réparée.
